(19) Europäisches Patentamt
European Patent Office
Office européen des brevets

(11) Veröffentlichungsnummer: **0 063 560**
**B1**

(12) # EUROPÄISCHE PATENTSCHRIFT

(45) Veröffentlichungstag der Patentschrift: **03.07.85**

(51) Int. Cl.⁴: **C 02 F 1/70**, B 01 D 53/34

(21) Anmeldenummer: **82890054.8**

(22) Anmeldetag: **15.04.82**

(54) **Verfahren zur gleichzeitigen Reinigung bzw. Entgiftung von Cr-(VI)-haltigen Abwässern oder Lösungen.**

(30) Priorität: **16.04.81 AT 1756/81**

(43) Veröffentlichungstag der Anmeldung: **27.10.82 Patentblatt 82/43**

(45) Bekanntmachung des Hinweises auf die Patenterteilung: **03.07.85 Patentblatt 85/27**

(84) Benannte Vertragsstaaten: **BE DE FR GB IT SE**

(56) Entgegenhaltungen:
**DE - A - 2 614 933**
**US - A - 3 810 542**

(73) Patentinhaber: **Maschinenfabrik Andritz Actiengesellschaft, Statteggerstrasse 18, A-8045 Graz-Andritz (AT)**

(72) Erfinder: **Samhaber, Friedrich, Dipl.Ing.Dr., Schieferhub 5, A-4722 Peuerbach (AT)**

(74) Vertreter: **Köhler-Pavlik, Johann, Dipl.-Ing., Margaretenplatz 5, A-1050 Wien (AT)**

**EP 0 063 560 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Bei vielen elektrochemischen Prozessen, welche Chrom(VI)salzhältige Elektrolyte verwenden, fallen Chrom(VI)-hältige Abwässer an, deren umweltfreundliche Beseitigung wegen der hohen Giftigkeit der Chrom(VI)-verbindungen problematisch und kostenaufwendig ist. Diese giftigen Abwässer enthalten das sechswertige Chrom je nach pH-Wert entweder in Form von $CrO_4^{2-}$-Anionen oder von $Cr_2O_7^{2-}$-Anionen. Da Chrom(VI)verbindungen ein Vielfaches der Giftigkeit von Chrom(III)verbindungen aufweisen bzw. Chrom(III)verbindungen verglichen mit Chrom(VI)verbindungen praktisch ungiftig sind, beruhen die meisten derzeit in technischem Ausmass durchgeführten Entgiftungsmethoden für Chrom(VI)-hältige Abwässer auf einer Reduktion der Chrom(VI)-verbindungen zu Chrom(III)verbindungen.

Derzeit wird die Entgiftung derartiger Chrom(VI)-hältiger Abwässer mit Hilfe von im Handel erhältlichen Chemikalien definierter Zusammensetzung mit starker Reduzierwirkung vorgenommen. Als solche handelsüblichen Chemikalien dienen derzeit vor allem Eisen(II)sulfat oder Alkalisulfite.

Diese Chemikalien haben den Nachteil, dass sie teuer sind, dass sie meist nicht im gleichen Werk verfügbar sind und daher mit zusätzlichen Fracht-und Transportkosten belastet werden und einen nennenswerten Manipulationsaufwand erfordern. Ausserdem belasten die Reaktionsprodukte dieser Chemikalien das Abwasser. Es wurde nun gefunden, dass sich Nachteile der geschilderten Art weitgehend mildern oder gänzlich vermeiden lassen, wenn die Entgiftung derartiger Chrom(VI)-hältiger Abwässer nicht mit handelsüblichen Chemikalien sondern mit reduzierend wirkenden Abgasen und/oder Abwässern wie NO und bzw. oder $NO_2$-hältigen Abgasen bzw. Abwässern oder sauren Waschwässern, die durch die Wäschen NO- und bzw. oder $NO_2$-hältiger Abgase erhalten werden, vorgenommen wird. Der NO- und bzw. oder $NO_2$-Anteil wird im folgenden $NO_x$ genannt, wobei x Zahlenwerte zwischen 0,5 und 2 einnehmen kann und $NO_2$ identisch ist mit $N_2O_4$.

Bei der Aufarbeitung von Stickstoffmonoxyd aus bei der Metallbeizerei anfallenden Abgasen ist es bereits aus der DE-A 2 614 933 bekannt, Stickstoffmonoxyd (NO) zu Stickstoffdioxyd ($NO_2$) mittels einer Redoxreaktion aufzuoxydieren, wobei als Oxydationsmittel u.a. Kaliumdichromat- bzw. Kaliumpermanganatlösungen vorgeschlagen wurden. Diese Vorgangsweise hat den Nachteil, dass sich das gebildete $NO_2$ in Wasser oder in alkalischen Lösungen unter Disproportionieren zu Nitrit und Nitrat löst, wobei ersteres selbst giftig ist und vor Abgabe in eine Neutralisationsanlage nochmals kosten- und energieaufwendig zu Nitrat oxydiert werden muss.

Erfindungsgemäss erfolgt eine einstufige, vollständige Oxydation zu Salpetersäure ($HNO_3$), was bei Anwendung des an sich bekannten Oxydationsmittels Kaliumdichromat dann möglich ist, wenn, wie sie dies erfindungsgemäss vorgesehen ist, der Oxydationsvorgang in stark saurem Milieu, d.h. bei einem pH-Wert bis zu 0,5 vorgenommen wird.

Demgemäss ist das erfindungsgemässe Verfahren dadurch gekennzeichnet, dass zum Zwecke der gleichzeitigen Reinigung bzw. Entgiftung von Cr-(VI)-hältigen Abwässern oder Lösungen und von $NO_x$-hältigen Abwässern oder Abgasen (x = 0,5 bis 2,0) durch eine Redoxreaktion in stark saurem Milieu (pH bis zu 0,5) die Cr-(VI)-verbindungen zu Cr-(III)-verbindungen durch die $NO_x$-hältigen Abgase und/oder Abwässer reduziert und dabei diese $NO_x$-hältigen Abgase bzw. Abwässer durch die Cr-(VI)-verbindungen zu $NHO_3$ aufoxydiert werden.

Nach dem erfindungsgemässen Verfahren wird nicht nur der Giftstoffgehalt des Chrom(VI)-hältigen Abwassers, sondern auch jener des $NO_x$-hältigen Abgases bzw. Abwassers verringert bzw. beseitigt. Wenn in einer Produktionsanlage oder Fabrik sowohl Chrom(VI)-hältige Abwässer als auch $NO_x$-hältige Abgase bzw. Abwasser anfallen, können nach dem erfindungsgemässen Verfahren Beseitigungs- bzw. Entgiftungskosten in doppelter Weise eingespart werden, da der Gift- bzw. Schadstoffgehalt des einen Abgases durch jenen des anderen Abgases bzw. Abwassers verringert oder beseitigt wird und umgekehrt. Nach der derzeit üblichen Vorgangsweise wird dagegen sowohl der Giftstoffgehalt des Chrom(VI)-hältigen Abwassers als auch unabhängig davon der $NO_x$-Gehalt des $NO_x$-hältigen Abgases bzw. Abwassers durch Zusatz zugekaufter handelsüblicher Chemikalien verringert oder beseitigt. Dieser doppelte Chemikalienaufwand zur Lösung von Abgas- bzw. Abwasserproblemen kann nach dem erfindungsgemässen Verfahren je nach Menge und Schadstoffgehalt der anfallenden Abgase bzw. Abwässer weitgehend bis völlig eingespart werden. Zusätzlich wird dabei der $NO_x$-Anteil in eine wiedergewinnbare Form übergeführt und kann z.B. durch Extraktion als $HNO_3$ wiedergewonnen werden.

Ein typisches Beispiel für eine Anlagekombination, bei welcher sowohl Chrom(VI)-hältige Abwässer als auch $NO_x$-hältige Abgase anfallen, stellt eine Edelstahlbeizlinie dar, bei welcher Edelstahl vorerst elektrolytisch in einem Neutralelektrolyten und anschliessend in einer Flusssäure/Salpetersäuremischung gebeizt wird.

Beim elektrolytischen Beizprozess im Neutralelektrolyten wird ein Teil des aus dem Edelstahl stammenden Chroms zu einer Chrom(VI)verbindung oxydiert und diese gelangt ins Abwasser.

Bei der anschliessenden Nachbehandlung des Edelstahls in der Flusssäure/Salpetersäuremischung entsteht ein $NO_x$-hältiges Abgas, welches abgesaugt und vernichtet werden muss.

Diese Anlagekombination stellt einen idealen Anwendungsfall für das erfindungsgemässe Verfahren dar. In einem solchen Fall wird die Entgiftung bzw. Reinigung der Abwässer und Abgase beispielsweise zweckmässig so durchgeführt, dass die $NO_x$-hältigen Abgase in einem oder mehreren Waschtürmen mit dem Chrom(VI)-hältigen sauren Abwasser gewaschen werden. Dabei wird der $NO_x$-Gehalt der Abgase zu $NO_3^-$ oxydiert und die Chrom(VI)verbindungen zu Chrom(III)verbindungen reduziert und damit entgiftet nach folgenden Gleichungen:

$$2\,NO + Cr_2O_7^{2-} + 6\,H^+ \rightarrow$$
$$\rightarrow 2\,NO_3^- + 2\,Cr^{3+} + 3\,H_2O$$

$$6\,NO_2 + Cr_2O_7^{2-} + 2\,H^+ \rightarrow$$
$$\rightarrow 6\,NO_3^- + 2\,Cr^{3+} + H_2O$$

Die Redoxpotentiale betragen:

$$NO_g + 2\,H_2O\,/\,NO_3^- + 4\,H^+ : +\,0{,}96\,V$$
$$N_2O_{4g} + 2\,H_2O\,/\,2\,NO_3^- + 4\,H^+ : +\,0{,}81\,V$$

Es ist auch möglich, die $NO_x$-hältigen Abgase mit Wasser oder verdünnten Säuren zu waschen und das Waschwasser mit dem Cr(VI)-hältigen Abwasser zur Reaktion zu bringen.

Die beim elektrolytischen Beizprozess anfallenden Chrom(VI)-hältigen Abwasser weisen meist einen pH-Wert von etwa 0,5 auf. Dieser pH-Wert ist für die gewünschte Umsetzung gut geeignet. Chrom(VI)-hältige Abwässer, welche eine zu geringe Wasserstoffionenkonzentration aufweisen, werden zweckmässig durch Ansäuern auf diesen oder einen ähnlichen pH-Wert eingestellt.

Wenn die verfügbare Menge an $NO_x$-hältigen Abgasen nicht ausreicht, um die Chrom(VI)verbindungen im Abwasser restlos zu reduzieren, muss der Rest in der üblichen Weise durch Zusatz eines Reduktionsmittels in Chrom(III) übergeführt werden.

Bei der Anlagekombination elektrolytische Beize und Flusssäure/Salpetersäure(Mischsäure)-Beize ist im Regelfall aber eher das Gegenteil der Fall. Die verfügbare Menge an $NO_x$-hältigen Abgasen übersteigt dann das Angebot an Chrom(VI)-Anteilen im Abwasser. Die quantitative Reduzierung der Chrom(VI)-Anteile ist dann möglich, jedoch bleibt in diesem Fall ein Überschuss an $NO_x$-Anteilen.

Damit auch in derart gelagerten Fällen eine Lösung sowohl des Chrom(VI)-Abwasserproblems als auch des $NO_x$-Abgasproblems möglich ist, empfiehlt es sich in Ausgestaltung des Verfahrens, die für die weitgehend oder vollständige Umsetzung der $NO_x$-Anteile der Abgase im Chrom(VI)-hältigen Abwasser fehlende Menge an Chrom(VI)verbindungen durch elektrolytische Oxydation der vorhandenen Chrom(III)verbindungen zu erzeugen.

Dies kann entweder so durchgeführt werden, dass die Elektrolyse direkt an dem Chrom-hältigen Abwasser vorgenommen wird, bevor dieses zur Wäsche der $NO_x$-Abgase oder zur Reaktion mit der Waschflüssigkeit der $NO_x$-Abgaswäsche verwendet wird.

Oder man installiert einen von der Chrom(VI)abwasser-Entgiftungsstufe unabhängigen, dieser nachgeschalteten, Kreislauf mit seiner sauren Chrom(VI)salzlösung, welche zuerst zum Waschen der $NO_x$-Abgase verwendet wird — wobei sich ein Teil der Chrom(VI)verbindungen zu Chrom(III)verbindungen umsetzt — und anschliessend durch eine elektrolytische Oxydationszelle geleitet wird, in welcher Chrom(III)verbindungen wieder zu Chrom(VI)-verbindungen regeneriert werden und so erneut der Wäsche der $NO_x$-Abgase zur Verfügung stehen. Die in diesem Fall sich in der Kreislaufflüssigkeit anreichernde Salpetersäure kann daraus z.B. durch flüssig/flüssig-Extraktion nach einem der üblichen Verfahren kontinuierlich oder diskontinuierlich entfernt werden. Mit besonderem Vorteil verwendet man dazu als organisches Extraktionsmittel eine Mischung von Tributylphosphat und einem in Wasser unlöslichem, organischen Verdünnungsmittel z.B. Hexachlorbutadien.

Diese soeben geschilderte Verfahrensstufe kann auch unabhängig von der Chrom(VI)abwasser-Entgiftungsstufe durchgeführt werden. Dies ist in allen jenen Fällen angezeigt, in welchen $NO_x$-Abgase gereinigt werden sollen, aber keine Chrom(VI)-hältigen Abwässer zur Verfügung stehen.

*Ausführungsbeispiele*

*Beispiel 1*

Eine mit Füllkörpern beschickte Absorptionskolonne von 4 m Höhe und 400 mm Durchmesser aus säurefestem Material wird mit einem aus einer elektrolytischen Edelstahlbeizanlage stammenden Abwasser folgender Zusammensetzung berieselt:

| | |
|---|---|
| Cr(VI) | 3,9 g/l |
| Cr(III) | 0,5 g/l |
| $Na_2SO_4$ | 28,5 g/l |
| $HNO_3$ | 5,0 g/l |
| $H_2SO_4$ | 18,5 g/l |
| Fe(III) | 7,5 g/l |

Dieses Abwasser, das zu Beginn des Waschvorganges einen pH-Wert von 0,4 aufweist, wird am Kopf der Kolonne eingesprüht und sammelt sich am Fuss der Kolonne, von wo es einem Sammeltank zugeführt wird. Von dort wird es von einer Pumpe angesaugt und wieder zum Kopf der Kolonne gefördert. Die stündlich im Kreislauf gepumpte Abwassermenge beträgt 2 $m^3$. Bei einem Seitenstutzen am Fuss der Kolonne wird NO-hältiges Abgas aus einer Mischsäure-Edelstahlbeizanlage (NO-Gehalt 12.000 Massen ppm) in dem Ausmass eingeleitet, dass die Verweildauer im Absorptionsturm 6 Sekunden beträgt.

Nach $5^1/_2$ Stunden Betriebsdauer wurde der gesamte Chrom(VI)-Anteil reduziert und damit entgiftet. Der $HNO_3$-Gehalt der Umlaufflüssigkeit erhöhte sich dabei auf 10 g/l.

*Beispiel 2*

Es wird wie in Beispiel 1 angegeben, gearbeitet, jedoch anstelle einer Absorptionseinheit (bestehend aus Absorptionskolonne, Sammelbehälter und Pumpe) 4 derartige Absorptionseinheiten hintereinander geschaltet. Dabei wird das NO-hältige Abgas am Fuss von Kolonne I eingeleitet, vom Kopf der Kolonne I dem Fuss der Kolonne II zugeleitet, vom Kopf der Kolonne II dem Fuss der Kolonne III zugeleitet und schliesslich vom Kopf der Kolonne III dem Fuss der Kolonne IV zugeleitet. Den Kopf der Kolonne IV verlässt dann das gereinigte Abgas. In jeder der 4 Absorptionseinheiten zirkulieren unabhängig voneinander Chrom(VI)-hältige Abwasserströme verschiedener Konzentration. Zu Beginn des Betriebes entspricht die Zusammensetzung des Abwassers im Sammelbehälter IV jener von Beispiel 1. Der Chrom(VI)-Gehalt im Sammelbehälter V ist geringer als jener in Behälter IV, in Behälter II geringer als in Behälter III und in Behälter I geringer als in Behälter II. Nach einer Betriebsdauer von 2 Stunden wird der — inzwischen Chrom(VI)freie-Inhalt von Sammelbehälter I in einen Ausblasebehälter abgepumpt, in welchem die restlichen NO-Anteile durch Einleiten von Inertgas ausgeblasen werden. Der Inhalt von Behälter II wird anschliessend in Behälter I, jener von Behälter III in Behälter II und jener von Behälter IV in Behälter III gepumpt. Der Behälter IV wird darauf mit frischem Chrom(VI)-hältigem Abwasser gefüllt, wodurch der ursprüngliche Betriebszustand wieder hergestellt ist.

Durch dieses alle 2 Stunden vorgenommene, taktweise Umpumpen wird ein pseudo-kontinuierlicher Betrieb, in welchem das zu reinigende Abgas und Abwasser im Gegenstrom zueinander geführt werden, ermöglicht. Der Chrom(VI)-Gehalt des Abwassers wird dabei quantitativ in Chrom(III)verbindungen übergeführt und dadurch entgiftet.

*Beispiel 3*

Es wird wie in Beispiel 1 angegeben, gearbeitet, jedoch anstelle des NO-hältigen Abgases ein Abgas mit einem NO-Gehalt von 1500 ppm und einem $NO_2$-Gehalt von 1600 ppm und anstelle des aus der elektrolytischen Edelstahl-Beizanlage stammenden Abwassers zur Wäsche der $No_x$-hältigen Abgase eine schwefelsaure Dichromatlösung mit einm Cr(VI)-gehalt von 20,6 g/l verwendet. Der pH-Wert dieser Lösung beträgt 0,5. Der $NO_x$-Gehalt der Abgase wird bis auf einen Rest von 300 ppm aus dem Abgas entfernt.

*Beispiel 4* (siehe Abb. 1)

Eine Durchfluss-Elektrolysezelle üblicher Bauart mit 2 Graphitelektroden und einem Diaphragma aus keramischem Material (z.B. durch Brennen einer Mischung von 75% $Al_2O_3$ und 25% $SiO_2$ hergestellt) wird mit einer wässrigen Lösung beschickt, welche 100 g/l $Cr_2O_3$ (als Sulfat) und 350 g/l $H_2SO_4$ enthält. Bei einer Stromdichte von 3 A/dm$^2$, einer Spannung von 3,5 Volt und einer Temperatur von 50°C wird elektrolysiert, wobei an der Anode Chromsäure gebildet wird. An der Kathode setzt Wasserstoffentwicklung ein. Die Stromausbeute beträgt ca. 80%, der Strombedarf ca. 3,5 kWh pro kg $CrO_3$.

Der Kathodenraum der Durchflusszelle wird laufend mit der aus dem $NO_x$-Waschturm (welcher mit einem Abgas der Zusammensetzung von Beispiel 3 beschickt wird) abfliessenden Lösung, welche an Cr(VI) verarmt und Cr(III) angereichert ist, beschickt. Im gleichen Ausmass läuft aus dem Anodenraum die an Cr(VI) angereicherte und Cr(III) verarmte wässrige Lösung ab, welche nach Passieren einer 3stufigen Mischer-Scheider-Einrichtung, in welcher überschüssige Salpetersäure entfernt wird, über einen Zwischenbehälter und eine Pumpe wieder zum Kopf des $NO_x$-Absorptionsturmes zurückgeführt wird, wodurch der Flüssigkeitskreislauf geschlossen ist. Eine Umgehungsleitung, die vom Kathodenraum direkt zur Pumpe führt, erlaubt mit einem regelbaren Flüssigkeitsstrom das Diaphragma und den Anodenraum zu umgehen.

In der Mischer-Scheider-Einrichtung wird die $HNO_3$ aus der wässrigen Phase mit einem Extraktionsmittel, welches 65 Gew.-% Tributylphosphat und 35 Gew.-% Hexachlorbutadien enthält, extrahiert (Phasenverhältnis organische : wässrige Phase = 3 : 1). Das beladene Extraktionsmittel wird in einer gleichartig aufgebauten, dreistufigen Mischer-Scheider-Einrichtung durch Wasser regeneriert und in regenerierter Form wieder in die erste Mischer-Scheider-Einrichtung zurückgeführt. Das Regenerat enthält die rückgewonnene Salpetersäure, welche sich bei der Oxydation von NO und $NO_2$ gebildet hat. Das den Waschturm verlassende Abgas weist einen $NO_x$-Gehalt (Summe NO + $NO_2$) von 100 Vol.ppm auf.

**Patentansprüche**

1. Verfahren zur gleichzeitigen Reinigung bzw. Entgiftung von Cr-(VI)-hältigen Abwässern oder Lösungen und von $NO_x$-hältigen Abwässern oder Abgasen ($x = 0{,}5$ bis 2,0) durch eine Redoxreaktion, dadurch gekennzeichnet, dass in stark saurem Milieu (pH-Wert bis zu 0,5) die Cr-(VI)-Verbindungen zu Cr-(III)-Verbindungen durch $NO_x$-hältige Abgase und (oder) Abwässer reduziert und dabei diese $NO_x$-hältigen Abgase oder Abwässer durch die Cr-(VI)-Verbindungen zu $HNO_3$ aufoxidiert werden.

2. Verfahren nach Anspruch 1, dadurch gekennzeichnet, dass das dabei resultierende Oxidationsprodukt der $NO_x$-Verbindungen — die gebildete Salpetersäure — aus dem Reaktionsprodukt durch Extraktion entfernt und wiedergewonnen wird.

3. Verfahren nach Anspruch 1 oder 2, dadurch gekennzeichnet, dass als Chrom(VI)-hältige Lösungen Lösungen mit $Cr_2O_7$ und/oder $CrO_4^{2-}$-Anionen verwendet werden.

4. Verfahren nach Ansprüchen 1 bis 3, dadurch gekennzeichnet, dass als Cr-(VI)-hältige Lösungen Beizablaugen aus der Edelstahlbeize verwendet werden.

5. Verfahren nach den Ansprüchen 1 bis 4, dadurch gekennzeichnet, dass nichtumgesetzte Cr-(VI)-hältige Lösungen in die Abgas-Wascheinrichtung rückgeleitet und so im Kreislauf geführt werden.

**Claims**

1. A process of simultaneously purifying and/or detoxicating sewage or solutions which contain Cr-(VI) and sewage or exhaust gases which contain(s) $NO_x$ ($x = 0.5$ to 2.0) by an oxidation-reduction reaction, characterized in that the Cr(VI)-compounds are reduced in a highly acidic medium (ph value up to 0.5) by exhaust gases and (or) sewage which contain(s) $NO_x$ and said exhaust gases or sewage which contain(s) $NO_x$ are oxidized in that step by the Cr-(VI)-compounds to form $HNO_3$.

2. A process according to claim 1, characterized in that the resulting oxidation product of the $NO_x$ compounds — the resulting nitric acid — are removed from the reaction product by extraction and are recovered.

3. A process according to claim 1 or 2, characterized in that solutions containing $Cr_2O_7$ and/or $CrO_4^{2-}$ anions are used as solutions which contain chromium(VI).

4. A process accordind to claim 1 to 4, characterized in that pickles which have been used to pickle special steel are used as solutions which contain Cr(VI).

5. A process according to any of claims 1 to 4, characterized in that solutions which contain unreacted Cr(VI) are recycled to the exhaust gas scrubber and are thus circulated.

**Revendications**

1. Procédé de purification et de désintoxication simultanées d'eaux résiduaires ou de solutions contenant du chrome(VI) et d'eaux ou de gaz résiduaires contenant des oxydes d'azote $NO_x$ (x = 0,5-2,0) par une réaction rédox, caractérisé en ce que les composés de chrome(VI) sont, en milieu fortement acide (pH jusqu'à 0,5), transformés par réduction en des composés de chrom(III) au moyen de gaz et/ou d'eaux résiduaires contenant des oxydes d'azote $NO_x$, qui sont ainsi transformés en acide nitrique ($HNO_3$) par oxydation effectuée par les composés de chrome(VI).

2. Procédé selon la revendication 1, caractérisé en ce que le produit de la réaction d'oxydation desdites oxydes d'azote $NO_x$, à savoir l'acide nitrique, est séparé du mélange réactionnel par extraction et récupéré.

3. Procédé selon la revendication 1 ou 2, caractérisé en ce que les solutions contenant du chrome(VI) mises en œuvre sont des solutions contenant des anions $Cr_2O_7^{2-}$ et/ou $CrO_4^{2-}$.

4. Procédé selon les revendications 1 à 3, caractérisé en ce que les solutions contenants du chrome(VI) mises en œuvre sont des bains de décapage épuisés provenant des installations de décapage d'aciers affinés.

5. Procédé selon les revendications 1 à 4, caractérisé en ce que des solutions contenant du chrome(VI) non transformé par réduction sont renvoyées vers l'installation de lavage des gaz résiduaires et remises ainsi en circulation.

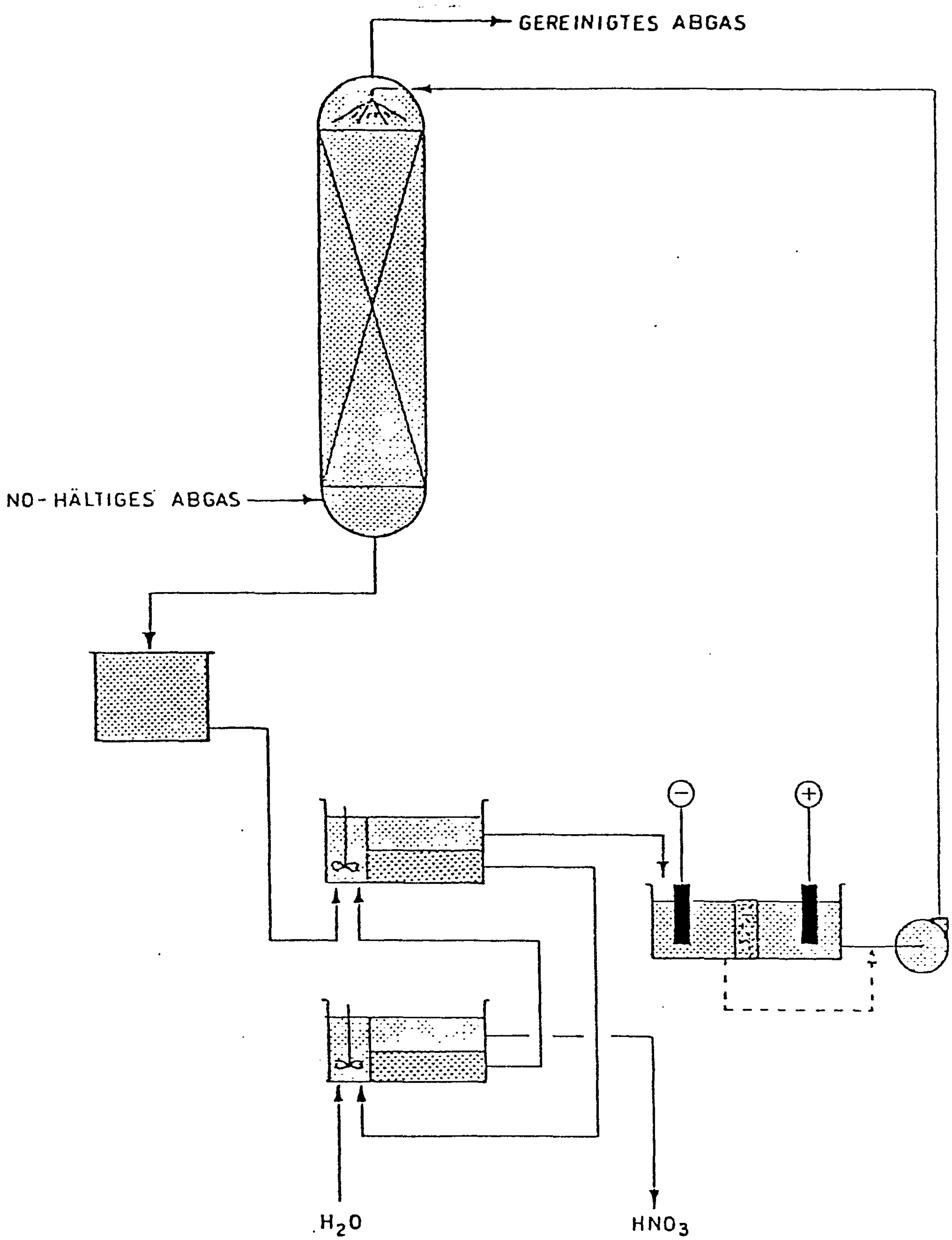
GEREINIGTES ABGAS
NO-HÄLTIGES ABGAS
H2O
HNO3